# EUROPÄISCHE PATENTSCHRIFT

(11) **EP 1 321 205 B1**
(45) Veröffentlichungstag und Bekanntmachung des Hinweises auf die Patenterteilung: **16.02.2005**
(21) Anmeldenummer: 02024795.3
(22) Anmeldetag: 07.11.2002
(51) Int. Cl.: B21D 26/02, B23P 11/00

(54) **Verfahren zum Verbinden von Bauteilen**
Method for connecting pieces
Méthode de jonction des pièces

(30) Priorität: 19.12.2001 DE 10162392
(43) Veröffentlichungstag der Anmeldung: 25.06.2003
(73) Patentinhaber: Bayerische Motoren Werke Aktiengesellschaft, 80809 München (DE)
(72) Erfinder: Schiffler, Walter-Josef, 84130 Dingolfing (DE)

(56) Entgegenhaltungen:
- DE-A- 19 508 632
- DE-A- 19 733 477
- DE-A- 19 750 067
- US-A- 6 134 767

## Beschreibung

Die vorliegende Erfindung betrifft ein Verfahren zum Verbinden eines Innenhochdruckumformbauteil mit mindestens einem weiteren Bauteil, gemäß dem Oberbegriff des Patentanspruches 1 (siehe z.B. DE-A 197 50 067).

Aus der DE 197 50 067 A1 ist ein Verfahren zum Verbinden eines Innenhochdruckumformbauteils mit einem weiteren Bauteil bekannt. Unter dem Begriff "Innenhochdruckumformteil" ist ein durch Innenhochdruckumformung hergestelltes Bauteil zu verstehen. Bei dem dort beschriebenen Verfahren werden ein zu verformender Rohrrohling und ein damit zu verbindendes Halterblech in ein Innenhochdruckumformwerkzeug eingelegt. Anschließend werden die Rohrenden verschlossen und in das Rohrinnere wird ein Druckmedium eingebracht. Durch Aufbringen eines Innendrucks im Rohr wird dieses entsprechend der Innenkontur des Innenhochdruckumformwerkzeugs verformt. Im Bereich des Halterblechs ist in einer der beiden Werkzeughälften eine Ausnehmung vorgesehen, in der ein axial verschieblicher Haltestempel angeordnet ist. Bei hinreichend großem Innendruck im Rohr fließen sowohl das Rohrmatenal als auch das Haltelrblechmaterial in die Ausnehmung des Werkzeugteils. Dabei bildet sich eine wulstartige Kuppe aus. Der Haltestempel drückt dann auf die sich bildende Kuppe, so dass eine zunächst flache Kappe entsteht. Anschließend wird die Druckkraft des Haltestempels gegen den Innendruck im Rohr soweit erhöht, dass die Kuppe zu einem, von außen gesehen, konkaven "Nebenformelement" umgeformt wird, welches das Halterblech formschlüssig hintergreift und eine unlösbare sogenannte Tox-Verbindung darstellt. Derartige Tox-Verbindungen haben aber nur eine sehr begrenzte Festigkeit.

Aus der DE 197 19426 A1 ist ein Innenhochdruckumformwerkzeug bekannt, bei dem in einer Werkzeughälfte zusätzlich ein Stanzwerkzeug integriert ist. Nach der Umformung des Bauteilrohlings entsprechend der Innenkontur des Innenhochdruckumformwerkzeugs wird mittels des Stanzwerkzeugs in das Innenhochdruckumformbauteil ein Loch gestanzt. Es kann vorgesehen sein, dass der dabei entstehende Stanzbutzen nach innen in das Innenhochdruckumformbauteil umgebogen wird, d.h. am Innenhochdruckumformbauteil verbleibt.

Die Befestigung von Anbauteilen, wie z.B. Blechen oder Flanschen an Innenhochdruckumformbauteilen erfolgt üblicherweise durch Anschrauben bzw. Anschweißen. Für die Anbringung solcher Anbauteile ist daher üblicherweise ein separater Arbeitsschritt erforderlich. Vor dem Anschrauben von Anbauteilen müssen zunächst die für die Bauteilmontage erforderlichen Befestigungsgeometrien an den beiden zu fügenden Teilen hergestellt werden.

Beim Anschweißen von Anbauteilen hingegen kann im Bereich der Schweißnaht ein Wärmeverzug entstehen. Ein weiteres Problem besteht darin, dass bei Innenhochdruckumformbauteilen, die häufig längliche Hohlräume aufweisen, im Hohlraum aus Platzgründen kein "Schweißpunktgegenhalter" platzierbar ist. Funktschweißungen sind daher nur mit einer sehr begrenzten Festigkeit möglich. Desweiteren ist eine Schweißung primär nur bei gleichen Materialien möglich.

Aufgabe der Erfindung ist es, ein Fügeverfahren zur Verbindung eines Innenhochdruckumformbauteils mit mindestens einem weiteren Bauteil anzugeben, das kostengünstig durchführbar ist und eine hohe Verbindungsfestigkeit ermöglicht.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht darin, ein Innenhochdruckumformbauteil und mindestens ein weiteres Bauteil durch "Einstanzen" eines Verbindungselementes miteinander zu verbinden. Das Verbindungselement kann beispielsweise ein Blindniet oder eine Topfmutter mit Innengewinde sein und das "weitere Bauteil" kann ein Halteblech, ein Befestigungsflansch o.ä. sein.

Zunächst muss das Innenhochdruckumformbauteil hergestellt werden. Hierzu werden ein zu verformender Bauteilrohling und das weitere Bauteil in das Innenhochdruckumformwerkzeug eingebracht. Anschließend wird das Innenhochdruckumformwerkzeug geschlossen und der Bauteilrohling wird in bekannter Weise durch Innenhochdruck verformt. Das Innenhochdruckumformbauteil und das weitere Bauteil liegen dann im Innenhochdruckumformwerkzeug flächig aneinander an.

Nun wird bei weiter geschlossenem Innenhochdruckumformwerkzeug über eine Ausnehmung, die im Innenhochdruckumformwerkzeug vorgesehen ist, ein "Verbindungsbauteil" in das weitere Bauteil und das Innenhochdruckumformbauteil eingestanzt. "Einstanzen" bedeutet, dass das Verbindungsbauteil das Innenhochdruckumformbauteil und das weitere Bauteil durchsetzt. Das Verbindungselement dient dabei als "Stanzwerkzeug". Vorzugsweise weist das Material des Verbindungselements eine höhere Festigkeit auf als das Material des Innenhochdruckumformbauteils und des weiteren Bauteils. Hierdurch ist zum einen eine saubere Stanzung sichergestellt und zum anderen wird eine hohe Verbindungsfestigkeit erreicht.

Nach einer Weiterbildung der Erfindung wird anschließend das Verbindungselement plastisch verformt. Dies kann z.B. durch einen Zugdorn erfolgen, ähnlich wie bei einem Blindniet. Das heißt, das Verbindungselement, das die beiden zu fügenden Bauteile durchsetzt, wird zusammengezogen bzw. zusammengepresst, so dass sich ein wulstartiger "Hinterschnitt" ausbildet, der die beiden Bauteile formschlüssig miteinander verbindet.

Vorzugsweise ist an einer Stirnseite des Verbindungselements ein umlaufender vorspringender Rand vorgesehen. Das Verbindungselement wird soweit eingestanzt, dass der umlaufende vorspringende Rand an einem der beiden zu fügenden Bauteile anliegt.

Nach einer Weiterbildung der Erfindung ist an der "vorderen" Stirnseite des Verbindungselements, d.h. an der Stirnseite, die beim Stanzen den beiden zu fügenden Bauteilen zugewandt ist, eine phasenartige Abschrägung vorgesehen. Diese Abschrägung hat primär den Zweck, dass der beim Stanzen entstehende Stanzbutzen nach innen in den Hohlraum des Innenhochdruckumformbauteils umgebogen wird und somit am Innenhochdruckumformbauteil verbleibt.

Zur weiteren Erhöhung der Festigkeit der Bauteilverbindung kann zwischen die beiden zu fügenden Bauteile Klebstoff eingebracht sein.

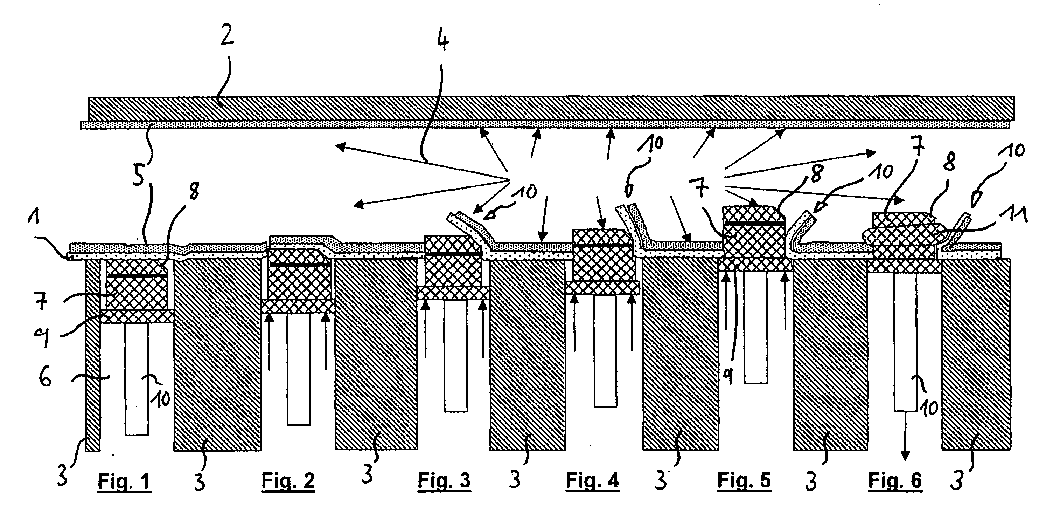

Im folgenden wird die Erfindung anhand eines Ausführungsbeispiels im Zusammenhang mit der Zeichnung näher erläutert. Die Figuren 1 bis 6 zeigen in stark schematisierter Darstellung die einzelnen Schritte bei der Herstellung der Bauteilverbindung.

Ein Bauteilrohling wird zusammen mit einem weiteren Bauteil 1, z.B. einem Halteblech, einem Flansch o.ä. zwischen zwei Werkzeughälften 2, 3 eines Innenhochdruckumformwerkzeuges eingebracht. Der Bauteilrohling kann beispielsweise ein Stahl- oder Aluminiumrohr sein. Anschließend werden die Enden des Rohres verschlossen. Nun wird mittels eines Druckmediums im Innern des Rohres ein Innendruck aufgebracht, was durch Pfeile 4 angedeutet ist. Aufgrund des Innendrucks verformt sich das Rohr entsprechend der Innenkontur des Innenhochdruckumformwerkzeugs 2, 3 zu einem "Innenhochdruckumformbauteil" 5. Das Innenhochdruckumformbauteil 5 liegt hier mit seiner Oberseite an der oberen Werkzeughälfte 2 und mit seiner Unterseite am Halteblech 1 an.

In der unteren Werkzeughälfte 3 ist eine Ausnehmung 6 vorgesehen, über die ein Verbindungselement 7 zugeführt wird. Das Verbindungselement 7 ist hier ein Blindniet. Die Vorderseite des Blindniets 7 liegt in Figur 1 an der Außenseite des Halteblechs 1 an. An der Vorderseite des Blindniets 7 ist eine phasenartige Abschrägung 8 vorgesehen. An der "Hinterseite" des Blindniets ist ein umlaufender vorspringender Rand 9 vorgesehen. Der Blindniet 7 weist ferner einen Zugdom 10 auf.

Durch eine hier nicht näher dargestellte "Stanzeinrichtung" wird der Blindniet 7 in der Ausnehmung 6 gegen das Halteblech 1 gepresst. Wie aus den Figuren 2 - 5 ersichtlich ist, dient der Blindniet 7 dabei als "Stanzwerkzeug". Das heißt, das Halteblech 1 und eine untere Wand des Innenhochdruckumformbauteils 5 werden durch den Blindniet 7 ausgestanzt. Aufgrund der Abschrägung 8 bildet sich ein Stanzbutzen 10, der nach innen umgebogen wird. Der durch die beiden lappenartigen Teile des Halteblechs 1 bzw. des Innenhochdruckumformbauteils 5 gebildete Stanzbutzen 10 verbleibt am fertigen Bauteil.

Der Blindniet 7 wird soweit eingestanzt, dass der vorspringende Rand 9 außen am Halteblech 1 anliegt, was in Figur 5 dargestellt ist.

Anschließend der Blindniet 7 durch ein Nietwerkzeug (nicht dargestellt) zusammengestaucht, d.h. plastisch verformt, was in Figur 6 dargestellt ist. Hierbei bildet sich eine umlaufende Wulst 11 aus, die an der Innenseite des Innenhochdruckumformbauteils 5 anliegt. Das Innenhochdruckumformbauteil 5 und das Halteblech 1 sind somit formschlüssig durch den Blindniet 7 miteinander verbunden. Bei Überschreiten einer vorgegebenen Zugkraft am Zugdom 10 reißt dieser wie bei einem herkömmlichen Blindniet ab.

Ein wesentlicher Vorteil der Erfindung besteht darin, dass eine sehr hohe Verbindungsfestigkeit sowie eine sehr hohe Positions- und Wiederholgenauigkeit erreicht werden. Das Innenhochdruckumformbauteil und das Halteblech sind nämlich durch das Einlegen in das Innenhochdruckumformwerkzeug exakt relativ zueinander ausgerichtet. Nietverbindungen können daher sehr genau positioniert werden, was eine hohe Prozesssicherheit und eine Anwendung in der Großserienfertigung ermöglicht. Ein weiterer Vorteil besteht darin, dass durch die Verwendung von Blindnieten keine "gegenüberliegende" Bauteilöffnung im Innenhochdruckumformbauteil erforderlich ist. Desweiteren können im Unterschied zu Schweißverbindungen auch unterschiedliche Materialen problemlos gefügt werden. Ferner kann durch Einbringen von Klebstoff zwischen die beiden zu fügenden Bauteile eine wesentliche Festigkeitssteigerung erreicht werden.

Alternativ zu dem in den Fig. 1-6 gezeigten Ausführungsbeispiel kann der Zugdorn 10 auch durch einen Gewindebolzen gebildet sein. Der Gewindebolzen verbleibt am fertigen Bauteil und dient als "Befestigungselement" zum Anschrauben eines weiteren Bauteils an das Innenhochdruckumformbauteil.

## Patentansprüche

1. Verfahren zum Verbinden von mindestens zwei Bauteilen mit folgenden Schritten:
a) Einbringen eines durch Innenhochdruck zu verformenden Bauteilrohlings und eines weiteren Bauteils zwischen Werkzeugteile eines Innenhochdruckumformwerkzeugs
b) Schließen des Innenhochdruckumformwerkzeugs,
c) Umformen des Bauteilrohlings mittels eines Druckmediums in ein Innenhochdruckumformbauteil, das flächig an dem weiteren Bauteil anliegt,
**dadurch gekennzeichnet, dass** ein Verbindungselement (7) in das Innenhochdruckumformbauteil (5) und das weitere Bauteil eingestanzt wird, wobei das Innenhochdruckumformbauteil (5) und das weitere Bauteil (1) in dem Innenhochdruckumformwerkzeug (2, 3) verbleiben.

2. Verfahren nach Anspruch 1, **dadurch gekennzeichnet, dass** das Verbindungselement (7) das Innenhochdruckumformbauteil (5) und das weitere Bauteil (1) durchsetzt, und dass das Innenhochdruckumformbauteil (5) und das weitere Bauteil (1) durch plastisches Verformen des Verbindungselements (7) formschlüssig miteinander verbunden werden.

3. Verfahren nach einem der Ansprüche 1 oder 2, **dadurch gekennzeichnet, dass** das Verbindungselement (7) an einer beim Einstanzen dem weiteren Bauteil (1) bzw. dem Innenhochdruckumformbauteil zugewandten Stirnseite eine phasenartige Abschrägung (8) aufweist, zum Umbiegen eines beim Stanzen entstehenden Stanzbutzens (10).

4. Verfahren nach einem der Ansprüche 1 bis 3, **dadurch gekennzeichnet, dass** das Verbindungselement (7) soweit eingestanzt wird, dass ein am Verbindungselement (7) vorgesehener umlaufender vorspringender Rand (9) an dem weiteren Bauteil (1) bzw. an dem Innenhochdruckumformbauteil (5) anliegt.

5. Verfahren nach einem der Ansprüche 1 bis 4, **dadurch gekennzeichnet, dass** das Verbindungselement (7) mittels eines Zugdorns (10) und eines Gegenhalters so verformt wird, dass sich ein umlaufender Haltewulst (11) bildet, der das Innenhochdruckumformbauteil (5) bzw. das weitere Bauteil (1) formschlüssig hintergreift.

6. Verfahren nach einem der Ansprüche 1 bis 5, **dadurch gekennzeichnet, dass** das Material des Verbindungselements (7) eine höhere Festigkeit aufweist als das Material des Innenhochdruckumfotmbauteils (5).

7. Verfahren nach einem der Ansprüche 1 bis 6, **dadurch gekennzeichnet, dass** das Verbindungselement (7) ein Blindniet ist.

8. Verfahren nach einem der Ansprüche 1 bis 6, **dadurch gekennzeichnet, dass** das Verbindungselement eine Topfmutter mit Innengewinde ist.

9. Verfahren nach einem der Ansprüche 1 bis 8, **dadurch gekennzeichnet, dass** das Innenhochdruckumformbauteil (5) und das weitere Bauteil (1) miteinander verklebt sind.

10. Verfahren nach einem der Ansprüche 1 bis 9, **dadurch gekennzeichnet dass** das Verbindungselement (7) einen Zugdorn (10) aufweist, der dem Innenhochdruckumformbauteil (5) abgewandt ist.

11. Verfahren nach Anspruch 10, **dadurch gekennzeichnet, dass** der Zugdorn (10) ein Gewindebolzen ist, der am fertigen Bauteil verbleibt und dort als Befestigungselement fungiert.

## Claims

1. A method for connecting at least two components comprising the following steps:
a) introducing a component blank to be deformed by internal high pressure and a further component between the tool parts of an internal high pressure forming tool
b) closing the internal high pressure forming tool,
c) forming the component blank, by means of a pressure medium into an internal high pressure formed component which rests flat on the further component,
**characterised in that** a connecting element (7) is stamped into the internal high pressure formed component (5) and the further component, the internal high pressure formed component (5) and the further component (1) remaining in the internal high pressure forming tool (2, 3).

2. A method according to claim 1, **characterised in that** the connecting element (7) penetrates the internal high pressure formed component (5) and the further component (1), and **in that** the internal high pressure formed component (5) and the further component (1) are positively connected to one another by plastic deformation of the connecting element (7).

3. A method according to either of claims 1 or 2, **characterised in that** the connecting element (7) has a phase-like bevel (8) on an end face facing the further component (1) or the internal high pressure formed component during punching, in order to bend over a punching (10) produced during punching.

4. A method according to any one of claims 1 to 3, **characterised in that** the connecting element (7) is punched in to such an extent that a peripheral projecting edge (9) provided on the connecting element (7) rests on the further component (1) or on the internal high pressure formed component (5).

5. A method according to any one of claims 1 to 4, **characterised in that** the connecting element (7) is deformed by means of a drawing mandrel (10) and a pressure pad in such a way that a peripheral holding bead (11) is formed which grips positively behind the internal high pressure formed component (5) or the further component (1).

6. A method according to any one of claims 1 to 5, **characterised in that** the material of the connecting element (7) has greater strength than the material of the internal high pressure formed component (5).

7. A method according to any one of claims 1 to 6, **characterised in that** the connecting element (7) is a blind rivet.

8. A method according to any one of claims 1 to 6, **characterised in that** the connecting element is a pot nut with an internal thread.

9. A method according to any one of claims 1 to 8, **characterised in that** the internal high pressure formed part (5) and the further component (1) are glued together.

10. A method according to any one of claims 1 to 9, **characterised in that** the connecting element (7) has a drawing mandrel (10) which is remote from the internal high pressure formed component (5).

11. A method according to claim 10, **characterised in that** the drawing mandrel (10) is a threaded pin which remains on the finished component and acts there as a fastening element.

## Revendications

1. Procédé de liaison d'au moins deux pièces comprenant les étapes suivantes :
a) introduction d'une ébauche de pièce à déformer par haute pression interne ainsi que d'une autre pièce entre les parties d'un outil de déformation par haute pression interne,
b) fermeture de l'outil de déformation par haute pression interne,
c) déformation de l'ébauche de pièce à l'aide d'un fluide sous pression pour obtenir une pièce déformée par haute pression interne appliquée en surface contre l'autre pièce,
**caractérisé en ce qu'**
on emboutit un élément de liaison (7) dans la pièce déformée par haute pression interne (5) et dans l'autre pièce, et
la pièce déformée par haute pression interne (5) et l'autre pièce (1) reste dans l'outil de déformation par haute pression interne (2, 3).

2. Procédé selon la revendication 1,
**caractérisé en ce que**
l'élément de liaison (7) traverse la pièce déformée par haute pression interne (5) et l'autre pièce (1) et
la pièce déformée par haute pression interne (5) et l'autre pièce (1) sont reliées l'une à l'autre par une liaison de forme réalisée par déformation plastique de l'élément de liaison (7).

3. Procédé selon l'une des revendications 1 ou 2,
**caractérisé en ce que**
l'élément de liaison (7) présente une partie inclinée (8) en forme de congé sur sa face frontale tournée contre l'autre pièce (1) ou la pièce déformée par haute pression interne lors de l'emboutissage, pour recourber une patte d'emboutissage (10) formée lors de l'opération d'emboutissage.

4. Procédé selon l'une des revendications 1 à 3,
**caractérisé en ce que**
l'élément de liaison (7) est embouti pour que le bord (9) périphérique en saillie prévu sur cet élément de liaison (7) s'applique contre l'autre pièce (1) ou la pièce déformée par haute pression interne (5).

5. Procédé selon l'une des revendications 1 à 4,
**caractérisé en ce que**
l'élément de liaison (7) est déformé à l'aide d'une broche de traction (10) et d'un contre-appui pour former un bourrelet de maintien (11), périphérique, qui vient prendre par une liaison par la forme derrière la pièce déformée par haute pression interne (5) ou l'autre pièce (1).

6. Procédé selon l'une des revendications 1 à 5,
**caractérisé en ce que**
la matière de l'élément de liaison (7) présente une résistance plus élevée que celle de la pièce déformée par haute pression interne (5).

7. Procédé selon l'une des revendications 1 à 6,
**caractérisé en ce que**
l'élément de liaison (7) est un rivet aveugle.

8. Procédé selon l'une des revendications 1 à 6,
**caractérisé en ce que**
l'élément de liaison est un écrou-chapeau avec filetage intérieur.

9. Procédé selon l'une des revendications 1 à 8,
**caractérisé en ce que**
la pièce déformée par haute pression interne (5) et l'autre pièce (1) sont collées l'une à l'autre.

10. Procédé selon l'une des revendications 1 à 9,
**caractérisé en ce que**
l'élément de liaison (7) comporte une broche de traction (10) opposée à la pièce déformée par haute pression interne (5).

11. Procédé selon la revendication 10,
**caractérisé en ce que**
la broche de traction (10) est une tige filetée qui reste sur la pièce terminée et fonctionne comme élément de fixation.
